Europäisches Patentamt

European Patent Office

Office européen des brevets

(11) Publication number: **0 103 384**
**B1**

# EUROPEAN PATENT SPECIFICATION

(45) Date of publication of patent specification: **28.09.88**

(51) Int. Cl.⁴: **F 02 C 7/05,** B 64 D 33/02

(21) Application number: **83304390.4**

(22) Date of filing: **29.07.83**

(54) Air intake system for engine.

(30) Priority: **17.08.82 CA 409600**

(43) Date of publication of application:
**21.03.84 Bulletin 84/12**

(45) Publication of the grant of the patent:
**28.09.88 Bulletin 88/39**

(84) Designated Contracting States:
**DE FR GB IT**

(56) References cited:
**US-A-3 329 377**
**US-A-3 371 471**
**US-A-3 952 972**

**PRODUCT ENGINEERING, vol. 45, no. 6, June
1974, Cleveland, GB, "Turboprop aircraft is
reliable, easy to maintain", pp. 12, 13**

(73) Proprietor: **THE DE HAVILLAND AIRCRAFT OF
CANADA, LIMITED
Downsview Ontario M3K 1Y5 (CA)**

(72) Inventor: **Gilbertson, Frederick Lewis
22 Moon Valley Drive
Rexdale Ontario, M9W 3N7 (CA)**

(74) Representative: **Gura, Henry Alan et al
MEWBURN ELLIS & CO. 2/3 Cursitor Street
London EC4A 1BQ (GB)**

Courier Press, Leamington Spa, England.

## Description

This invention relates to an air intake system for separating foreign particles and other objects from air flowing into the inlet of a gaseous power plant such as a gas turbine engine.

The ingestion of foreign particles and objects into gaseous power plants such as gas turbine engines is a long existing problem. Aircraft engines in particular are susceptible to ingesting objects such as birds, hail, sand, stones, pieces of tire and the like. Such objects can damage or destroy such an engine, particularly if it is a small high speed engine.

Numerous attempts have been made to provide structures which prevent foreign particles and objects from entering a power plant such as a gas turbine engine. However such systems have had one or more of a number of disadvantages. These disadvantages have included complexity, a tendency to reduce engine efficiency or power, weight penalties, and decreased accessibility of the engine for service. Examples of some of the many systems which have been conceived are shown in U.S. Patents 2,944,731; 3,309,867; 3,371,471; 3,513,641; 3,362,155 and 4,265,646.

In US 3,952,972 a gas turbine is intallled in an aircraft in a nacelle which has an air intake duct providing a first substantially rearward path leading from a forwardly facing air intake opening below the engine. Guide means in the duct separate a primary airstream to guide it along a second path at a substantial angle to the first, rearwardly extending path to supply air to the engine air inlet. A secondary stream of intake air is allowed to continue rearwards through an exit passage to the surrounding atmosphere. Debris carried in with the air through the air intake opening therefore tends to continue straight through and be discharged through the air exit passage. Immediately adjacent the point of separation of the primary airstream, a hopper is formed in the exit passage where supercooled water and particles of ice are allowed to accumulate without restricting the outlet passage and a cyclic ice shedder is provided to dislodge the accumulated material so that it can be discharged through the exit passage. US 3329377 is a further example of a separator for a gas turbine engine in which a primary airstream entering along a rearwardly directed path is turned through a large angle to flow to the engine air inlet while a secondary stream is allowed to continue rearwards out of the nacelle.

According to the present invention, a separator is provided for removing foreign particles and comprising an air intake duct extending rearwardly from an air intake opening for an intake airstream to flow in a first substantially rearward path therein, and means for separating from said intake airstream a primary airstream and for guiding said primary airstream along a second path at a substantial angle to the first path for passage into the engine air inlet, the intake duct being arranged to discharge a secondary stream of air from the intake airstream along a third path rearwardly so that particles entering the duct with the intake airstream will tend to travel with said secondary airstream to be separated from the primary airstream, a plenum being disposed behind the intake duct in the path of said secondary airstream and the particles carried by the secondary airstream being separated in said plenum from the airstream, duct means being connected to the plenum to guide a fourth stream of air from the plenum forwardly along a third path substantially separated from the third path and then to discharge said air smoothly into the primary airstream, forwardly of the rearmost part of the dividing boundary and means being provided for removing the separated particles from said plenum.

Other features of the invention will appear from the following description, taken together with the accompanying drawings in which:

Figure 1 is a side view, partly in section, of a prior art engine having a rear air inlet;

Figure 2 is a side view, partly in section, showing a typical prior art engine without a particle separation system;

Figure 3 is a side view, partly in section, showing an engine having a typical particle separation system of the kind recently proposed;

Figure 4 is a side view, partly in section, of an engine showing a particle separation system of a kind which was a forerunner to the present invention;

Figure 5 is a side view, partly in section, of an engine having a particle separation air intake system according to the present invention;

Figure 6 is a perspective view, from the front and top, showing the air intake system of Figure 5;

Figure 7 is a side view showing the air intake system of Figure 6 in closed position against the engine nacelle;

Figure 8 is a view similar to that of Figure 7 but showing the air intake system swung to an open position;

Figure 9 is a sectional view along lines 9—9 of Figure 6;

Figure 10 is a plan view taken in section along lines 10—10 of Figure 9;

Figure 11 is a sectional view along lines 11—11 of Figure 9;

Figure 12 is a sectional view along lines 12—12 of Figure 9;

Figure 13 is a sectional view along lines 13—13 of Figure 9;

Figure 14 is a perspective view, partly in section, of the front portion of the air intake system of Figure 6;

Figure 15 is a perspective view of guide and divider plates of the intake system of Figure 6;

Figure 16 is a partly broken away perspective view, taken from the rear and slightly above, of a portion of the intake system of Figure 6; and

Figure 17 is a partly broken away perspective view, taken from above and from the front, of the rear portion of the intake system of Figure 6.

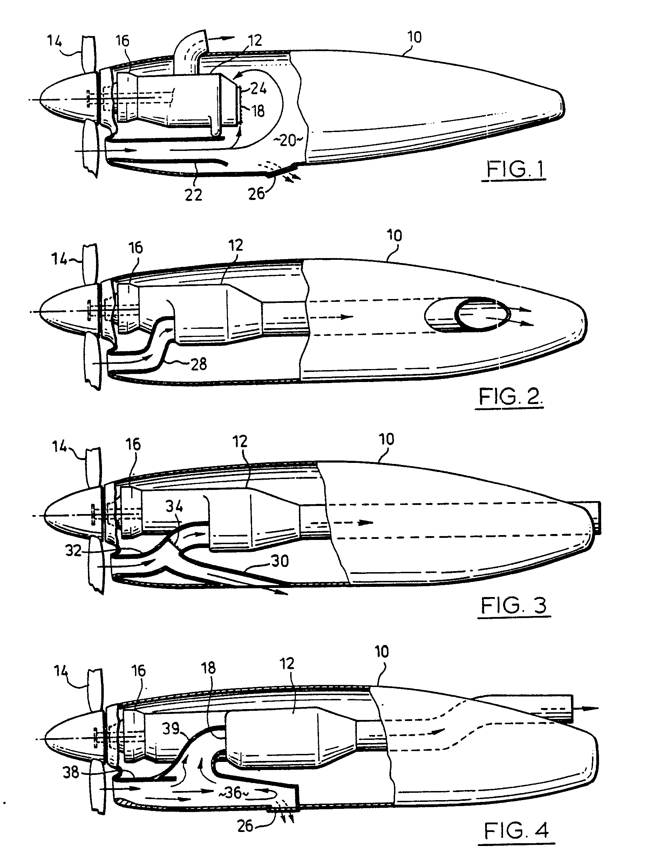

Reference is first made to Figure 1, which shows a typical engine, nacelle and air intake system of the kind presently used in certain aircraft made by The de Havilland Aircraft of Canada, Limited. As shown, housed in the nacelle 10 is a gas turbine engine 12 which drives a propeller 14 through a gearbox 16. The engine 12 is mounted with its air inlet 18 located at the rear of the engine and opening radially into a large plenum 20. Air enters an intake duct 22, travels rearwardly, and then travels upwardly through a screen 24 into the engine 12. Because the engine inlet faces rearwardly, foreign objects such as birds, sand and ice, which because of their momentum are unable to make the 180° turn into the engine air inlet, travel straight through and are bypassed out of the plenum 20 via a trapdoor 26. The system works well, but only a relatively few aircraft designs have a rearwardly facing engine which provides such particle separation.

Figure 2 shows a system used in many aircraft at the present time. The engine 12 faces forwardly and air for the engine enters an intake duct 28 and travels directly into the engine. There is no arrangement for removing foreign objects which are ingested, and any such foreign objects may damage the engine.

Figure 3 shows a modification of the Figure 2 arrangement of a kind which has been currently proposed for removing foreign objects and particles. In the Figure 3 arrangement a bypass duct 30 branches off the main intake duct 32 and removes about 15% of the intake air as bypass air. A screen 34 in the main duct 32 just downstream of the bypass duct 30 prevents foreign objects from travelling into the engine. The screen 34 is formed from heavy metal rods.

The Figure 3 arrangement has several serious disadvantages. Firstly, the screen 34, even though made of heavy material, must be shock mounted in order to withstand the impact of heavy objects such as birds. Secondly, because the screen 34 tends to ice, it must be electrically heated, thereby adding to the complexity and cost of the arrangement. Thirdly, each of the three ends of the intake duct arrangement must be shock mounted by means of a corrugated mounting, which adds weight and cost. Fourthly, when the engine is to be serviced, the nacelle must be removed and then the three branches of the intake duct must be separately removed, adding to the cost of servicing the engine. Finally, the loss of 15% of the intake air as bypass flow causes a reduction in the efficiency of the engine.

An attempt was made by The de Havilland Aircraft of Canada, Limited to avoid the disadvantages of the Figure 3 arrangement by adopting the Figure 4 arrangement. In the Figure 4 arrangement a large plenum 36 is provided at the rear of the intake duct 38 and into which the intake duct discharges. It was intended that the air entering the intake duct 38 would find its way upwardly from the plenum 36 through an upwardly directed branch duct 39 into the inlet 18 of the engine. Foreign objects and particles because of their momentum travel straight through into the rear of the plenum 36 for removal via the trapdoor 26.

When the Figure 4 arrangement was tested, it was found that instabilities occurred and the entire arrangement began to vibrate. It is believed that the problem was that the air flowing upwardly into the branch duct 39 directly from the main intake duct 38 interfered with air which first travelled into the plenum 36 and then attempted to travel upwardly into the branch duct 39. In simplified terms it is believed that first one airstream would prevail and then the other, much like traffic in two streams at a set of traffic lights. The resultant vibration of the structure and turbulence in the air fed into the engine were extremely undesirable.

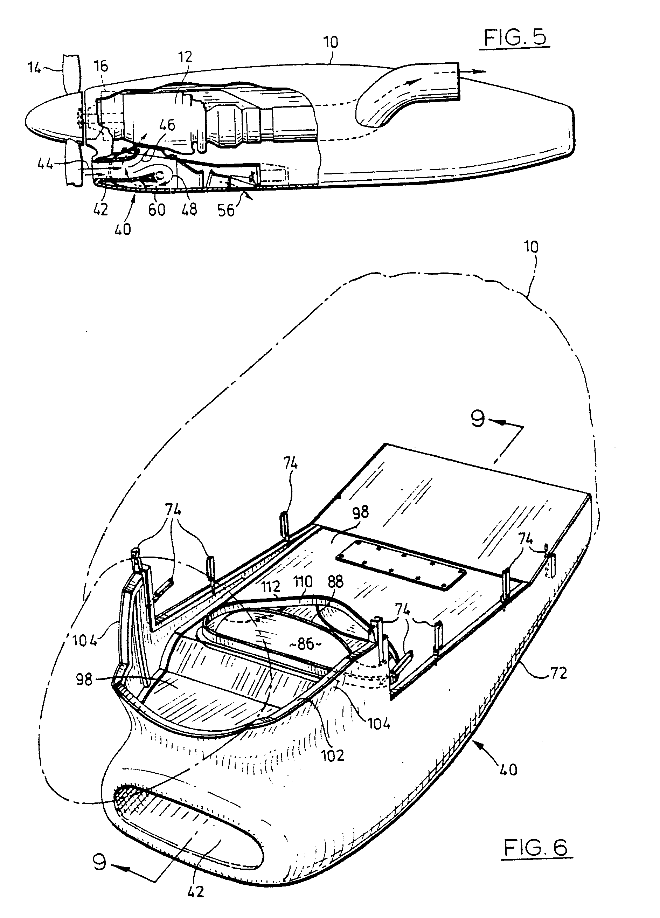

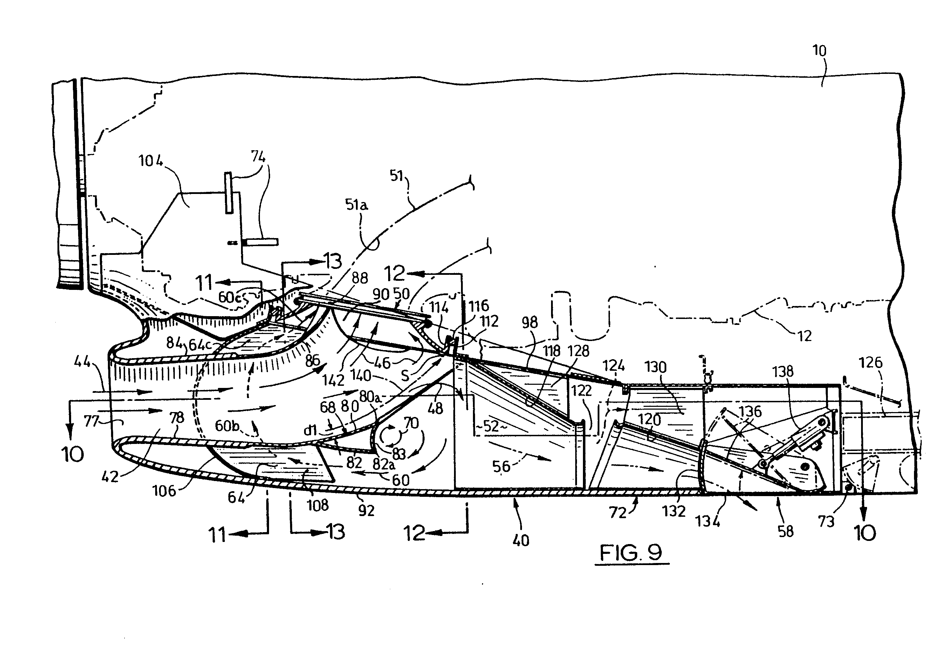

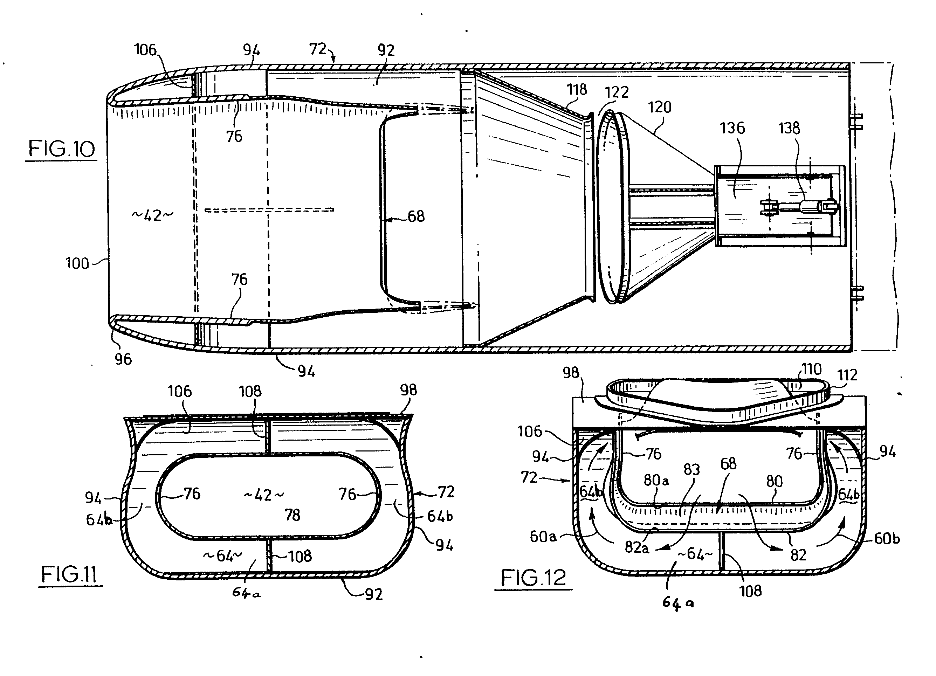

A preferred intake structure 40 according to the invention is shown in Figures 5 to 17 and has been found to operate in a highly satisfactory manner. The structure 40 will first be described generally with reference to Figures 5 and 9. As there shown, the intake structure 40 includes a main intake duct 42. An inlet airstream 44 enters duct 42 and is divided into a primary airstream 46 and a secondary airstream 48. The primary airstream 46 turns sharply upwardly and then travels directly into the engine inlet 50 and through the engine intake duct indicated in dotted lines at 51. The secondary airstream 48 travels directly rearwardly into a plenum 52 located behind duct 42. Birds, stones, ice and the like entering the main intake duct 42 simply travel straight through the plenum 52 as shown by arrows 56, and exit through a door 58 which is opened when required.

From the plenum 52, a third airstream 60 (which may be equal to the entire secondary airstream 48 if no other air is removed from the plenum 52) travels forwardly through an air duct 64 located below and to the sides of the main intake duct 42. When the third airstream 60 reaches the front end of the air duct 64, it divides into two streams 60a, 60b, one travelling upwardly on each side of the main air intake duct 42. The airstreams 60a, 60b rejoin as stream 60c at the top of the main air intake duct 42, and then travel rearwardly and upwardly through the peripheral gap formed by the engine inlet 50 and intake lip 86 (to be described), to rejoin the primary airstream 46 flowing into the engine inlet 50 and engine intake duct 51. (A portion of the third airstream also travels from the plenum 52 directly forwardly and upwardly at the sides of the intake duct 42 to rejoin the primary air stream, as will be described.)

The structure shown (and to be described in more detail) has a number of important features and advantages, which include the following:

1. The arrangement shown produces no significant instabilities. Instead of the third airstream 60 interfering with the primary airstream 46 as both attempt to travel into the engine, the third airstream 60 is guided forwardly and upwardly around the inlet duct and then fed into the primary airstream 46 in a path which is generally substantially parallel to that of the primary airstream 46, so that both join smoothly. The result is similar to a cloverleaf, rather than to the traffic light situation of Figure 4.

2. At the point where the primary and secondary airstreams separate, a cusp 68 is provided. The cusp 68 creates a sort of air roller bearing, indicated at 70 in Figure 9. The rotating air roller bearing 70 helps to separate the secondary airstream 48 travelling rearwardly into the plenum 52 from the third airstream 60 travelling forwardly into the duct 64. This improves the flow stability and reduces friction losses.

3. Since the door 58 need only be opened at times when foreign objects have been collected or are expected, there are normally no secondary air losses since no secondary air is vented without first passing through the engine.

4. Since the entire air intake system can be mounted in a single housing which (as will be described) can be hinged downwardly away from the engine for access to the engine, servicing of the engine is greatly facilitated.

5. No blocking screens are required, thereby minimizing deicing and anti-icing problems.

It is found that the invention solves a problem which in the past had been thought to be almost impossible to solve, i.e. it permits bypass of foreign objects without complexity and without creating significant instabilities, icing problems or substantial losses.

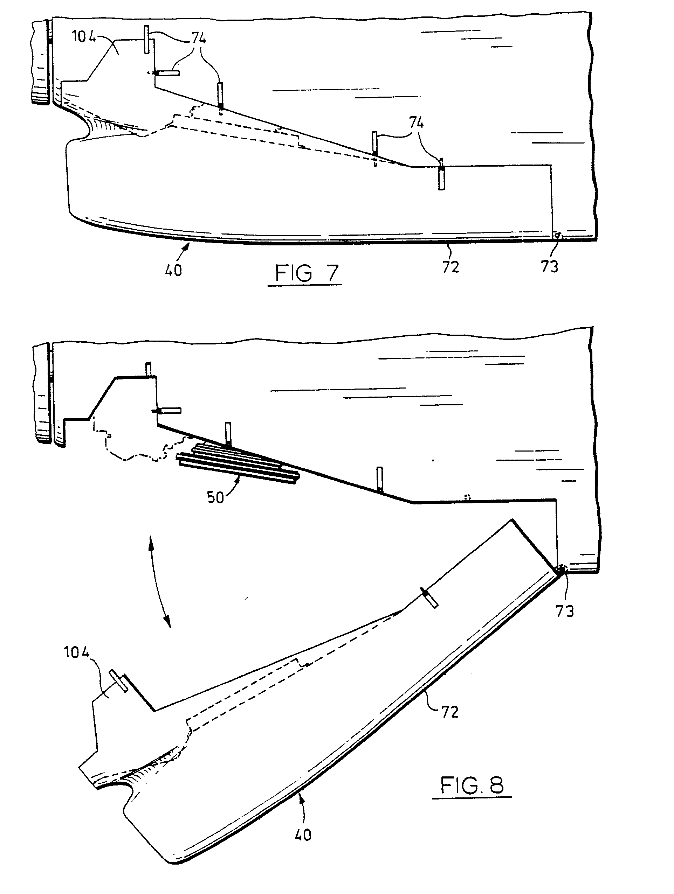

A more detailed description of the preferred embodiment of the invention is as follows. As best shown in Figures 6 to 9 inclusive, the intake structure 40 is formed as a unit in a housing 72 connected at its rear to the nacelle 10 by hinges 73. The intake structure 40 is normally held in closed position against the nacelle 10 by a set of latches 74 (Figure 6) which are conventional in nature and therefore will not be described in detail. As indicated, the latches 74 can be released and the intake structure 40 swung downwardly as shown in Figure 8 for engine servicing.

The main intake duct 42 is centered laterally within the housing 72. The intake duct 42 is generally rectangular in cross-section, as shown in the drawings, but with rounded sides 76 and an inlet opening 77. The bottom wall 78 of the main intake duct 42 terminates in the cusp or V-shaped formation 68, which consists of an upwardly curved bottom wall portion 80 and a straight bottom wall portion 82. Both terminate at rear edges 80a, 82a located directly beneath the engine inlet 50, with a concave filler plate 83 extending therebetween. At its sides the V-shaped formation or cusp 68 extends upwardly to the upper wall 98 (to be described) of the housing, as shown in Figures 9, 12 and 16.

The top wall 84 of the main intake duct 42 slopes slightly upwardly rearwardly along the bulk of its length and then at its rear curves sharply upwardly at a curved portion 86, terminating just above the bottom of the engine inlet 50. The rear edge 88 of the curved portion 86 also forms the front edge of a top opening 90 (Figures 6, 9 and 16) from the main intake duct 42 into the engine inlet 50. The curved portion 86 extends above the opening 90 and into the inlet 50 to help guide the primary airstream 46 upwardly into the inlet 50.

The housing 72 includes a bottom wall 92, sidewalls 94, a front wall 96, and an upper wall 98. A front opening 100 for the main intake duct 42 is located in the front wall 84 of the housing.

The housing sidewalls 94 extend above the housing upper wall 98 along the front part of the housing 78 and terminate in a formed rim 102 (Figure 6). The rim 102 is shaped to fit the contour of the lower edge of the nacelle 10 and also to ensure that the entire housing 72 can be firmly secured to the nacelle. The shape of the rim 102 is also arranged to facilitate access to the front of the engine 12. For this purpose the housing sidewalls 94 each include an upwardly projecting portion 104 adjacent the front thereof, as best shown in Figures 6 to 8 and 14. The upwardly projecting sidewall portions 104 help to ensure that the housing 72 will not detach from the nacelle 10 in use and also, when the housing 72 is swung downwardly, expose the sides of the front of engine 12 for servicing

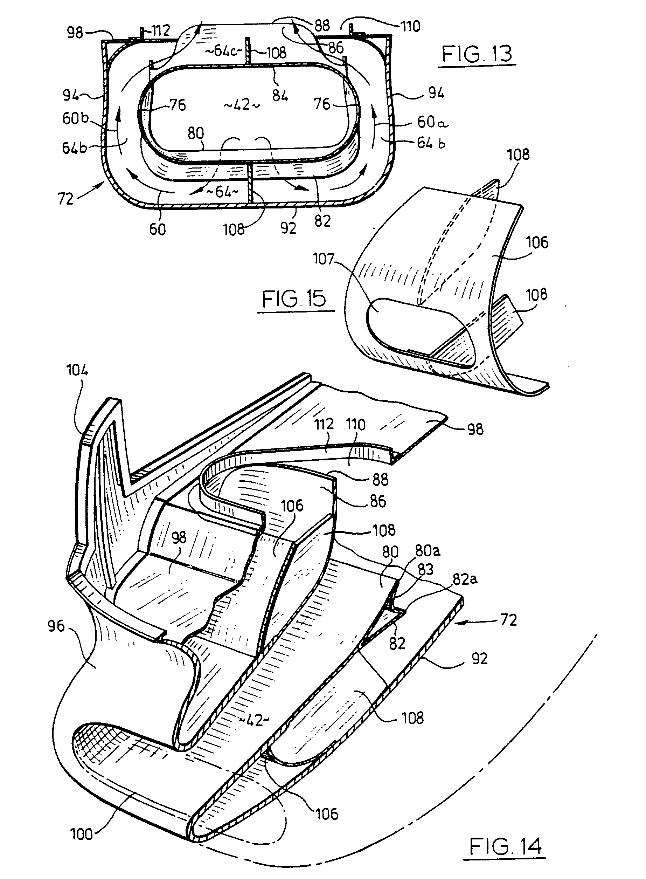

The lower portion 64a of the air duct 64 is defined in part by the space between the bottom wall 78 of the main intake duct 42 and the bottom wall 92 of the housing 72. The side portions 64b of the air duct 64 are formed by the spaces between the sidewalls 76 of the main intake duct 42 and the sidewalls 94 of the housing 72. The front of the air duct 64 is defined by a curved plate 106, best shown in Figures 9 and 15, which extends from the housing bottom wall 92 upwardly to a position above the front part of the main intake duct top wall 84. The curved plate 106 has a hole 107 therein for the intake duct 42 to pass therethrough. The top portion 64c of the air duct 64 is defined by the space between the upper part of the curved plate 106 and the curved rear portion 86 of the top wall 84 of the main intake duct 42.

A longitudinally extending vertical divider plate 108 within the secondary air duct 54 divides the air duct 64 laterally into two equal parts to improve the stability of the third airstream 60 as it travels upwardly on each side of the main intake duct 42.

To reinforce the housing 72, its upper wall 98 extends from the front wall 96 over the curved plate 106, and is secured to the housing front wall 96, the curved plate 106, and the sidewalls 94. The upper wall 98 then extends rearwardly to the rear of the housing 72.

As shown in Figures 6 and 14, the upper wall 98 includes a generally heart shaped opening 110 bordered by an upstanding rim 112. The opening 110 is shaped to match the shape of a standard engine inlet 50. The inlet 50 includes a downwardly and outwardly flared rim 114 (Figure 9) fitted with a conventional outwardly facing O-ring 116 against which the rim 112 seals when the housing 72 is swung to its closed position.

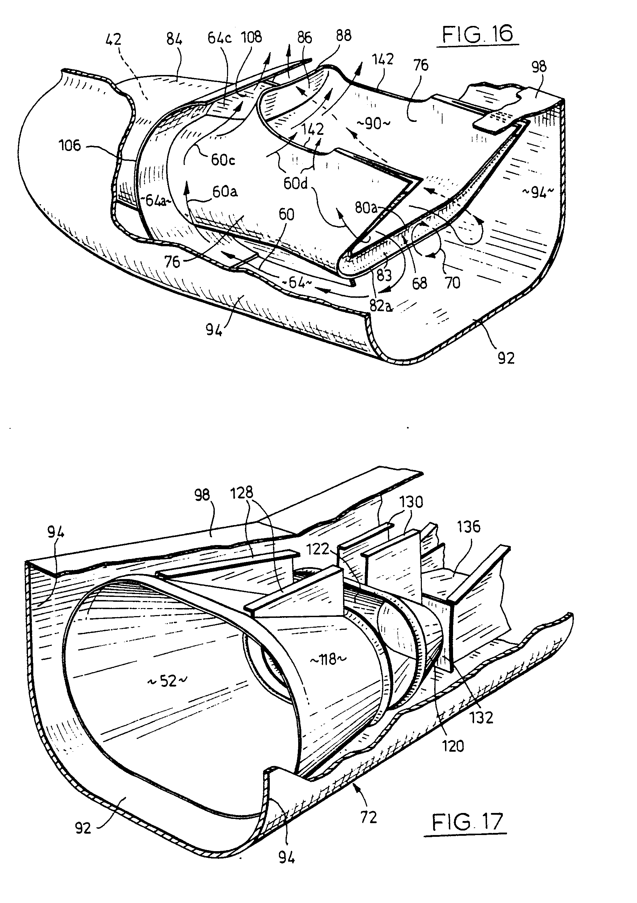

The plenum 52, in the rear portion of housing 72, is defined by two generally funnel-shaped structures 118, 120, best shown in Figures 9 and 17, which guide air (and particles) along a path of decreasing cross-sectional area toward the door 58. The funnel-shaped structures 118, 120 are separated by a space 122 which allows a fourth stream of air 124 (but not particles) travelling rearwardly through the funnel-shaped structures to travel upwardly and then rearwardly through the open rear end of the housing 72 and into an engine oil cooler 126 located behind the housing 72. This allows the intake structure 40 to perform dual duty, in that it provides particle free air both for the engine and also for the oil cooler of the engine.

The funnel-shaped structures 118, 120 are supported by flanges 128, 130 which extend from the tops of the structures 118, 120 to the upper wall 98 of the housing 72.

The door 58 includes a sector-shaped front surface 132, a flat lower surface 134 which is flush with the housing bottom wall 92 when the door is closed, and an upper surface 136 connected to a hydraulic actuator 138. When the door 58 is to be opened, the actuator 138 moves it to the dotted line position in Figure 9, permitting particles and other objects to exit from the intake structure.

The operation of the system is as follows. As shown in Figure 9, there is a stagnation point S just downstream of the engine inlet 50. Air which is directed toward the engine inlet 50 forwardly of the stagnation point S travels into the engine inlet as primary airstream 46. This is typically about 85% of the air entering main intake duct 42. Air directed toward the stagnation point S is indicated by arrow 140. Air flowing rearwardly of arrow 140 travels into the plenum 52 as the secondary airstream 48, together with the particles to be separated. Dimension d1 between arrow 140 and the lower wall 78 of the main intake duct is proportioned so that about 15% of the intake air is bled off as secondary air.

It will be noted that most dense particles entering the intake duct 42 will travel directly rearwardly into the plenum 52. The arrangement by which the third airstream 60c is fed into the engine inlet 50 forwardly of the wall 86 allows the curved wall 86 to be moved further rearwardly than would otherwise be possible, and this reduces the number of "line of sight" paths which a particle can follow to enter the engine inlet. Moreover the rearward movement of the curved wall 86 has been accomplished without incurring a substantial total pressure loss in the air fed to the engine. Although there is a "line of sight" between the inlet opening 77 and the engine inlet 50, the line is quite oblique, which reduces the likelihood of particles entering the engine inlet 50.

From the plenum 52, the third airstream 60 travels forwardly through the air duct 64 (including portions 64a, 64b thereof) beneath and to the sides of the main intake duct 42. The third airstream 60 is equal in flow to the secondary airstream 48 less the sum of any air flows travelling to the trapdoor 58, or to the oil cooler 126, or lost in leaks. The main portion of the third airstream 60 flows from lower duct 64 upwardly on each side of the main intake duct 42, and then rearwardly and upwardly through duct portion 64c, over curved portion 86 and into the engine inlet 50. As will be apparent from Figure 16, a part 60d of the third airstream 60 may also tend to travel around the sides of the cusp 68, directly forwardly and upwardly over the sides of the main intake duct 42, and then over the side edges of the upper opening 90 in the main intake duct 42. To accommodate this flow, which also merges smoothly with the primary airstream, the upper side edges of opening 90 are cut back or notched as indicated at 142, from a location forwardly of the stagnation point S forwardly to blend in with the lip 88 forming a continuous flow gap between duct 42 and engine inlet 50. Rearwardly of notches 142 the upper side edges of duct 42 seal against the top surface 98 of the structure, as shown in Figure 9. This prevents secondary air from feeding forwardly into the engine inlet 50 aft of the stagnation point S and causing flow separation.

The location of lip 88, which defines the dimension of the flow gap between the duct 42 and the engine inlet 50, is important. This lip, which guides the primary airstream 46, should be located so as to provide efficient turning of the primary airstream 46 into the engine inlet 50. Thus the lip 88 should not be too far from wall 51a. However, the spacing must be sufficient so as not to choke off the third airstream 60c. However, the spacing between lip 88 and wall 51a should be sufficiently small as not to create a larger third airstream than necessary, since it is desired to have most of the intake air travel directly into the engine inlet 50 which is the most efficient path.

It will also be noted that in the arrangement shown, the plenum 52 is pressurized, helping to produce a positive pressure on the convex side of the primary airstream 46 flowing through the main intake duct 42 into the engine inlet 50. This helps to deflect the primary airstream 46 into the engine inlet, although of course the main deflecting force consists of the suction produced by the engine. As mentioned, the main separation of the primary and secondary airstreams occurs at the stagnation point S which will vary in position with variation of the third airstream to primary airstream flow ratio.

The cusp 68, which produces an air roller bearing 70, separates the secondary and third airstreams from each other, and thus reduces losses in the system. Without such flow separation, buffeting between the forward and rearward flows tends to occur, and this creates not only losses but also undesired vibrations.

A further advantage of the system shown is that a simple boot de-icing system may be used, consisting simply of an expansible rubber boot (not shown) fitted around the opening 100 of the main air intake duct 42. Although ice will be

broken from the boot and will be shed into the main air intake 42 during operation, the ice will travel rearwardly into the plenum 52 where it can be disposed of without entering the engine. A complex anti-icing system (consisting of heating structure to prevent the formation of ice on engine intake screens) is not normally required.

Although a specific arrangement of air passages has been shown, it will be appreciated that various changes may be made while still preserving the feature of turning the primary airstream sharply upwardly while permitting a secondary airstream containing objects therein to travel into a plenum, and then guiding a third airstream from the plenum forwardly, separated from the second airstream, to rejoin the main airstream in an efficient manner.

In addition, while the system has been shown located below an aircraft engine located in a nacelle, the separator of the invention can be differently oriented with respect to the engine, and can be used with engines in applications other than in aircraft but where dust or particles may present a problem.

**Claims**

1. A separator for removing foreign particles from the air entering an air inlet of an engine, said separator comprising an air intake duct (42) extending rearwardly from an air intake opening (77) for an intake airstream (44) to flow in a first substantially rearwardly path therein, and means (68, 86) for separating primary and secondary airstreams (46, 48) from said intake airstream along a dividing boundary (S) and for guiding said primary airstream (46) along a second path at a substantial angle to the first path for passage into the engine air inlet (50), the intake duct (42) being arranged to discharge the secondary airstream (48) along a third path rearwardly so that particles entering the duct with the intake airstream will tend to travel with said secondary airstream to be separated from the primary airstream, characterised in that a plenum (52) is disposed behind the intake duct in the path of the secondary airstream and the particles carried by the airstream are separated in said plenum from the airstream, duct means being connected to the plenum to guide a third stream (60) of air from said plenum forwardly along a fourth path substantially separated from the third path and then to discharge said air smoothly into the primary airstream (46) forwardly of the rearmost part of said dividing boundary (S), and means (58) being provided for removing the separated particles from said plenum.

2. A separator according to claim 1 wherein said duct means comprises a passage (64) for said third airstream (60) extending forwardly beneath said intake duct and then upwardly beside said intake duct (42).

3. A separator according to claim 1 wherein said duct means comprises a passage (64) for said third airstream (60) extending forwardly beneath said intake duct, then upwardly beside said intake duct (42) and then rearwardly above said intake duct.

4. A separator according to claim 3 wherein the portion of the duct means extending rearwardly over said intake duct (42) is of decreasing cross-section in a rearward direction and terminates adjacent guide means (86) to discharge said third airstream (60) into said primary airstream over the guide means.

5. A separator according to any one of claims 2 to 4 wherein said duct means passage (64) extends forwardly beside as well as beneath the intake duct (42).

6. A separator according to any one of claims 2 to 5 wherein the intake duct (42) includes a lower rear edge (68) formed substantially in the shape of a cusp, said cusp acting as a flow separator to facilitate separation of said secondary airstream (48) flowing rearwardly into said plenum (52) from said third airstream (60) flowing forwardly beneath said intake duct.

7. A separator according to claim 5 together with claim 6 wherein the intake duct (42) includes rear lower and side edges (68) all formed substantially in the shape of a cusp and acting as a flow separator to facilitate separation of the secondary airstream.

8. A separator according to any one of the preceding claims and including means for conducting from said plenum (52) a fourth airstream (124) along a path at a substantial angle to said first path, said fourth airstream being adapted for use with an oil cooler (126).

9. A separator according to any one of the preceding claims comprising a housing (72) for said intake duct (42), plenum (52) and duct means (64), said housing including hinge means (73) adapted to be connected to said engine for swinging said housing between a closed position in which said guide means and duct means may deliver said primary and third airstreams into said engine air inlet and an open position in which said engine is accessible for service.

10. A separator according to any one of claims 1 to 8 comprising a housing (72) for said intake duct (42) and means (73, 74) for connecting said housing to a nacelle (10) containing the engine, the air intake duct having a top wall (84) with an upwardly curved rear portion (86) extending towards the engine air inlet (50) and an upper opening (90) behind said rear portion for guiding said primary airstream (46) along said path through said opening and into said engine inlet, said duct further having bottom and side walls (78, 76) spaced from bottom and side walls (92, 94) respectively of the housing, and the duct means for the third airstream (60) from the plenum comprising, in series, a first space (64a) between said bottom walls of the intake duct and the housing, respective second spaces (64b) between each side wall of the intake duct and the side walls of the housing, and a third space (64c) extending rearwardly and upwardly over said rear portion (86) of said top wall of the intake duct and to the engine air inlet.

11. A separator according to claim 10 and including a curved plate (106) in said housing adjacent the front thereof, said curved plate having an opening (107) therein for said intake duct to extend therethrough, said curved plate defining a front wall for said second spaces (64b) and a top wall for said third space (64c).

12. A separator according to claim 10 or claim 11 wherein said second spaces (64b) between the intake duct and housing side walls also communicate between the plenum (52) and the engine air inlet (50) for guiding a portion of the third airstream (60) directly forwardly and upwardly from the plenum into the air inlet.

13. A separator according to any one of claims 10 to 12 wherein said means connecting the housing (72) to the nacelle (10) includes hinge means (73) at the rear of said housing for swinging said housing between a closed position in which said duct means direct the third airstream (60) to said engine air inlet and an open position in which said housing is swung downwardly from said engine so that said engine is accessible for service, and latch means (74) for securing said housing in closed position.

14. A separator according to any one of claims 10 to 13 wherein the housing includes upwardly projecting wall portions (104) adjacent the front of said housing to provide access to the sides of said engine adjacent the front of said engine.

15. A separator according to any one of claims 10 to 14 wherein said upper opening (90) of the intake duct is defined by said top wall rear portion (86) and upper side edges of the duct, said upper side edges being sealed adjacent their rear against an upper wall of the plenum (52) to prevent said secondary airstream in said plenum from travelling forwardly and upwardly into said opening.

16. A separator according to any one of the preceding claims, wherein door means (58) are provided in the plenum (52) for removing the separated particles therein.

**Patentansprüche**

1. Abscheider zum Beseitigen von Fremdkörpern aus der in den Lufteinlaß eines Motors eintretenden Luft, bestehend aus einem Lufteinlaßkanal (42), der sich von einer Lufteinlaßöffnung (77) für einen eintretenden Luftstrom (44) nach hinten erstreckt, damit dieser in demselben in einer im wesentlichen nach hinten gerichteten Bahn strömt, und Mitteln (68, 86) zum Abtrennen eines primären und eines sekundären Luftstroms (46, 48) von dem eintretenden Luftstrom längs einer Trennungsgrenze (S) und zum Leiten der primären Luftströmung (46) längs einer zweiten Bahn unter einem wesentlichen Winkel zu der ersten Bahn zum Eintreten in den Motor-Lufteinlaß (50), wobei der Einlaßkanal (42) so angeordnet ist, um den sekundären Luftstrom (48) längs einer dritten Bahn nach hinten auszustoßen, so daß die mit dem eintretenden Luftstrom in den Kanal eindringenden Teilchen zur Abscheidung von den primären Luftstrom durch den sekundären Luftstrom mitgerissen werden, dadurch gekennzeichnet, daß eine Kammer (52) hinter dem Einlaßkanal in der Bahn des sekundären Luftstroms angeordnet ist und daß die von dem Luftstrom mitgerissenen Teilchen in dieser Kammer von dem Luftstrom abgeschieden werden, daß ein Kanal mit der Kammer verbunden ist, um einen dritten Luftstrom (60) von der Kammer längs einer vierten Bahn, die von der dritten Bahn im wesentlichen getrennt ist, nach vorne zu leiten und um diese Luft sodann sanft in den primären Luftstrom (46) vor dem hintersten Teil der Trenngrenze (S) einzuspeisen, und daß Mittel (58) vorgesehen sind, um die abgeschiedenen Teilchen aus dieser Kammer zu beseitigen.

2. Abscheider nach Anspruch 1, wobei der Kanal einen Durchlaß (64) für den dritten Luftstrom (60) umfaßt, der sich unter dem Einlaßkanal nach vorne und sodann neben dem Einlaßkanal (42) nach oben erstreckt.

3. Abscheider nach Anspruch 1, wobei der Kanal einem Durchlaß (64) für den dritten Luftstrom (60) umfaßt, der sich unter dem Einlaßkanal nach vorne erstreckt und sodann neben dem Einlaßkanal (42) nach oben und anschließend über dem Einlaßkanal nach hinten erstreckt.

4. Abscheider nach Anspruch 3, wobei derjenige Bereich des Kanals, der sich über dem Einlaßkanal (42) nach hinten erstreckt, einen nach hinten abnehmenden Querschnitt hat und neben Führungsmitteln (86) endet, um den dritten Luftstrom (60) über die Führungsmittel in den primären Luftstrom einzuspeisen.

5. Abscheider nach einem der Ansprüche 2 bis 4, wobei sich der Kanal (64) sowohl seitlich als auch unter dem Einlaßkanal (42) nach vorne erstreckt.

6. Abscheider nach einem der Ansprüche 2 bis 5, wobei der Einlaßkanal (42) eine im wesentlichen keilförmige untere Hinterkante (68) hat, wobei dieser Keil als Strömungstrenneinrichtung dient, um die Abtrennung des in die Kammer (52) nach hinten strömenden sekundären Luftstroms (48) von dem unter dem Einlaßkanal nach vorne strömenden dritten Luftstrom (60) zu erleichtern.

7. Abscheider nach Anspruch 5 zusammen mit Anspruch 6, wobei der Einlaßkanal (42) hintere untere und seitliche Kanten (68) hat, die alle im wesentlichen keilförmig ausgebildet sind und als Strömungstrenneinrichtung dienen, um die Abtrennung des sekundären Luftstroms zu erleichtern.

8. Abscheider nach einem der vorhergehenden Ansprüche und mit Mitteln, um einen vierten Luftstrom (124) von der Kammer (52) längs einer Bahn unter einem wesentlichen Winkel zu der ersten Bahn zu leiten, wobei der vierte Luftstrom zur Verwendung mit einem Ölkühler (126) geeignet ist.

9. Abscheider nach einem der vorhergehenden Ansprüche mit einem Gehäuse (72) für den Einlaßkanal (42), die Kammer (52) und den Kanal (64), wobei das Gehäuse Gelenke (73) aufweist, die mit dem Motor verbindbar sind, um das Gehäuse zwischen einer geschlossenen Stellung, in der die Führungsmittel und der Kanal den primären und den dritten Luftstrom dem Motor-Lufteinlaß zuführen können, und einer geöffneten Stellung zu verschwenken, in der der Motor zur Wartung zugängig ist.

10. Abscheider nach einem der Ansprüche 1 bis 8 mit einem Gehäuse (72) für den Einlaßkanal (42) und Mitteln (73, 74) zum Verbinden des Gehäuses mit einer den Motor enthaltenden Verkleidung (10), wobei der Lufteinlaßkanal eine Oberwand (84) mit einem nach oben gekrümmten hinteren Bereich (86) hat, der sich zum Motor-Lufteinlaß (50) hin erstreckt, und mit einer oberen Öffnung (90) hinter dem hinteren Bereich, um den primären Luftstrom (46) längs dieser Bahn durch diese Öffnung hindurch und in den Motoreinlaß zu leiten, wobei dieser Kanal ferner eine Bodenwand und Seitenwände (78, 76) hat, die von der Bodenwand (92) und von den Seitenwänden (94) des Gehäuses einen Abstand haben, und wobei der Kanal für den dritten Luftstrom (60) von der Kammer hintereinander umfaßt: einen ersten Raum (64a) zwischen den Bodenwänden des Einlaßkanals und des Gehäuses, entsprechende zweite Räume (64b) zwischen jeder Seitenwand des Einlaßkanals und den Seitenwänden des Gehäuses und einen dritten Raum (64c), der sich über dem hinteren Bereich (86) der Oberwand des Einlaßkanals nach hinten und nach oben zum Motor-Lufteinlaß erstreckt.

11. Abscheider nach Anspruch 10 mit einer gekrümmten Platte (106) in dem Gehäuse nahe dessen Front, wobei die gekrümmte Platte eine Öffnung (107) aufweist, durch die sich der Einlaßkanal erstreckt, wobei die gekrümmte Platte eine Frontwand für die zweiten Räume (64b) und eine Oberwand für den dritten Raum (64c) bildet.

12. Abscheider nach Anspruch 10 oder 11, wobei die zweiten Räume (64b) zwischen dem Einlaßkanal und den Seitenwänden des Gehäuses auch mit der Kammer (52) und dem Motor-Lufteinlaß (50) in Verbindung stehen, um einen Teil des dritten Luftstroms (60) unmittelbar von der Kammer nach vorne und nach oben in den Lufteinlaß zu leiten.

13. Abscheider nach einem der Ansprüche 10 bis 12, wobei die das Gehäuse (72) mit der Verkleidung (10) verbindenden Mittel Scharniere (73) am hinteren Ende des Gehäuses umfassen, um das Gehäuse zwischen einer geschlossenen Stellung, in der der Kanal den dritten Luftstrom (60) zu dem Motor-Lufteinlaß leitet, und einer geöffneten Stellung zu verschwenken, in der das Gehäuse vom Motor nach unten geschwenkt ist, so daß der Motor zur Wartung zugängig ist, und eine Verriegelung (74) umfaßt, um das Gehäuse in der geschlossenen Stellung zu sichern.

14. Abscheider nach einem der Ansprüche 10 bis 13, wobei das Gehäuse nach oben gerichtete Wandbereiche (104) neben der Front des Gehäuses aufweist, um einen Zugang zu den Seiten des Motors neben seiner Front zu schaffen.

15. Abscheider nach einem der Ansprüche 10 bis 14, wobei die obere Öffnung (90) des Einlaßkanals durch den hinteren Bereich (86) der Oberwand und durch obere Seitenränder des Kanals begrenzt ist, wobei diese oberen Seitenränder nahe ihrem hinteren Ende an einer Oberwand der Kammer (52) dicht anliegen, um den zweiten Luftstrom in diese Kammer daran zu hindern, nach vorne und nach oben in diese Öffnung zu strömen.

16. Abscheider nach einem der vorhergehenden Ansprüche, wobei in der Kammer (52) Klappen (58) angeordnet sind zur Beseitigung der darin abgeschiedenen Teilchen.

**Revendications**

1. Séparateur pour enlever les particules étrangères de l'air entrant dans une entrée d'air d'un moteur, ledit séparateur comprenant une gaine d'entrée d'air (42) s'étendant vers l'arrière d'une ouverture d'entrée d'air (77) pour qu'un courant d'air d'entrée (44) s'y écoule suivant un premier trajet sensiblement vers l'arrière et un moyen (68, 86) pour séparer des courants d'air primaire et secondaire (46, 48) dudit courant d'air d'entrée le long d'une limite de division (S) et pour guider ledit courant d'air primaire (46) le long d'un second trajet à un angle sensible par rapport au premier trajet pour un passage dans l'entrée d'air (50) du moteur, la gaine d'entrée (42) étant agencée pour évacuer le courant d'air secondaire (48) le long d'un troisième trajet vers l'arrière de manière que les particules entrant dans la gaine avec le courant d'air d'entrée aient tendance à se déplacer avec ledit courant d'air secondaire pour être séparées du courant d'air primaire, caractérisé en ce qu'une chambre (52) est disposée derrière le gaine d'entrée dans la trajet du courant d'air secondaire et les particules entraînées par le courant d'air sont séparées dans ladite chambre du courant d'air, un moyen formant gaine étant connecté à la chambre pour guider un troisième courant (60) d'air de ladite chambre vers l'avant le long d'un quatrième trajet sensiblement séparé du troisième trajet puis pour évacuer ledit air uniment dans le courant d'air primaire (46) vers l'avant de la partie la plus arrière de ladite limite de division (S), et un moyen (58) étant prévu pour enlever les particules séparées de ladite chambre.

2. Séparateur selon la revendication 1 où ledit moyen formant gaine comprend un passage (64) pour ledit troisième courant d'air (60) s'étendant vers l'avant en-dessous de ladite gaine d'entrée puis vers le haut à côté de ladite gaine d'entrée (42).

3. Séparateur selon la revendication 1, où ledit moyen formant gaine comprend un passage (64) pour ledit troisième courant d'air (60) s'étendant vers l'avant en-dessous de ladite gaine d'entrée, puis vers le haut à côté de ladite gaine d'entrée (42) puis vers l'arrière au-dessus de ladite gaine d'entrée.

4. Séparateur selon la revendication 3, où la portion du moyen formant gaine s'étendant vers l'arrière sur ladite gaine d'entrée (42) est de section transversale décroissante en direction vers l'arrière et se termine à proximité d'un moyen de guidage (86) pour évacuer ledit troisième courant d'air (60) dans ledit courant d'air primaire sur le moyen de guidage.

5. Séparateur selon l'une quelconque des revendications 2 à 4, où ledit passage (64) du moyen formant gaine s'étend vers l'avant à côté ainsi qu'en-dessous de la gaine d'entrée (42).

6. Séparateur selon l'une des revendications 2 à 5, où la gaine d'entrée (42) comprend un bord arrière inférieure (68) ayant sensiblement la forme d'une pointe, ladite pointe agissant comme séparateur d'écoulement pour faciliter la séparation dudit courant d'air secondaire (48) s'écoulant vers l'arrière dans ladite chambre (52), dudit troisième courant d'air (60) s'écoulant vers l'avant en-dessous de ladite gaine d'entrée.

7. Séparateur selon la revendication 5 avec la revendication 6, où la gaine d'entrée (42) comprend des bords arrière inférieur et latéraux (68) ayant tous sensiblement la forme d'une pointe et agissant comme un séparateur d'écoulement pour faciliter la séparation du courant d'air secondaire.

8. Séparateur selon l'une des revendications précédentes et comprenant un moyen pour conduire, de ladite chambre (52), un quatrième courant d'air (124) le long d'un trajet à un angle sensible avec ledit premier trajet, ledit quatrième courant d'air étant adapté à être utilisé avec un refroidisseur d'huile (126).

9. Séparateur selon l'une des revendications précédentes, comprenant un logement (72) pour ladite gaine d'entrée (42), la chambre (52) et le moyen formant gaine (64), ledit logement comprenant un moyen formant charnière (73) adapté à être connecté audit moteur pour faire pivoter ledit logement entre une position fermée dans laquelle ledit moyen de guidage et ledit moyen formant gaine peuvent délivrer lesdits courants d'air primaire et troisième dans ladite entrée du moteur et une position ouverte où ledit moteur est accessible pour son entretien.

10. Séparateur selon l'une des revendications 1 à 8, comprenant un logement (72) pour ladite gaine d'air d'entrée (42) et un moyen (73, 74) pour connecter ledit logement à une nacelle (10) contenant le moteur, la gaine d'entrée d'air ayant une paroi supérieure (84) avec une partie arrière courbée vers le haut (86) s'étendant vers l'entrée (50) d'air du moteur et une ouverture supérieure (90) derrière ladite partie arrière pour guider ledit courant d'air primaire (46) le long dudit trajet à travers ladite ouverture et dans ladite entrée du moteur, ladite gaine ayant de plus des parois de fond et latérales (78, 76) espacées des parois de fond et latérales (92, 94) respectivement du logement et le moyen formant gaine pour le troisième courant d'air (60) de la chambre comprenant, en série, un premier espace (64a) entre lesdites parois de fond de la gaine d'entrée et du logement, des seconds espaces respectifs (64b) entre chaque paroi latérale de la gaine d'entrée et les parois latérales du logement et un troisième espace (64c) s'étendant vers l'arrière et vers le haut sur ladite partie arrière (86) de ladite paroi supérieure de la gaine d'entrée et jusqu'à l'entrée d'air du moteur.

11. Séparateur selon la revendication 10 et comprenant une plaque courbée (106) dans ledit logement adjacente à son avant, ladite plaque courbée ayant une ouverture (107) pour que la gaine d'entrée la traverse, ladite plaque courbée définissant une paroi avant pour lesdits seconds espaces (64b) et une paroi supérieure pour ledit troisième espace (64c).

12. Séparateur selon la revendication 10 ou la revendication 11, où lesdits seconds espaces (64b) entre la gaine d'entrée et les parois latérales du logement communiquent également entre la chambre (52) et l'entrée d'air (50) du moteur pour guider une portion du troisième courant d'air (60) directement vers l'avant et vers le haut de la chambre dans l'entrée d'air.

13. Séparateur selon l'une des revendications 10 à 12 où ledit moyen connectant le logement (72) à la nacelle (10) comprend un moyen formant charnière (73) à l'arrière dudit logement pour faire pivoter ledit logement entre une position fermée dans laquelle ledit moyen formant gaine dirige le troisième courant d'air (60) vers ladite entrée d'air du moteur et une position ouverte dans laquelle ledit logement est pivoté vers le bas dudit moteur de manière que ledit moteur soit accessible pour son entretien, et un moyen de verrouillage (74) pour fixer ledit logement en position fermée.

14. Séparateur selon l'une quelconque des revendications 10 à 13, où le logement comprend des parties de parois (104) dépassant vers le haut, adjacentes à l'avant dudit logement pour permettre l'accès aux côtés dudit moteur à proximité de l'avant dudit moteur.

15. Séparateur selon l'une des revendications 10 à 14, où ladite ouverture supérieure (90) de la gaine d'entrée est définie par ladite partie arrière (86) de la paroi supérieure et les bords latéraux supérieurs de la gaine, lesdits bords latéraux supérieurs étant scellés adjacents à leur arrière contre une paroi supérieure de la chambre (52) pour empêcher ledit courant d'air secondaire dans ladite chambre de se déplacer vers l'avant et vers le haut dans ladite ouverture.

16. Séparateur selon l'une des revendications précédentes, où des moyens formant portes (58) sont prévus dans la chambre (52) pour en enlever les particules séparées.

FIG. 1

FIG. 2.

FIG. 3

FIG. 4

FIG. 5

FIG. 6

FIG. 7

FIG. 8

FIG. 9

0 103 384

FIG.10

FIG.11

FIG.12

# 0 103 384

FIG. 13

FIG. 15

FIG. 14

0 103 384

FIG. 16

FIG. 17

7